# EUROPEAN PATENT SPECIFICATION

(11) **EP 1 665 854 B1**
(45) Date of publication and mention of the grant of the patent: **27.08.2008**
(21) Application number: 03757831.7
(22) Date of filing: 12.09.2003
(51) Int. Cl.: H04Q 7/38

(54) **CONTEXT TRANSFER FOR SEAMLESS HANDOVER**
KONTEXTÜBERTRAGUNG FÜR NAHTLOSES HANDOVER
TRANSFERT DE CONTEXTES POUR TRANSFERT INTERCELLULAIRE CONTINU

(43) Date of publication of application: 07.06.2006
(73) Proprietor: NTT DoCoMo, Inc., Tokyo 100-6150 (JP)
(72) Inventor: PRASAD, Anand R., Kanagawaken (JP); WANG, Hu, Shanghai, 200135 (CN); SCHOO, Peter, 82194 Groebenzell (DE)
(74) Representative: Spilgies, Jan-Hendrik
(86) International application number: PCT/EP2003/010185
(87) International publication number: WO 2005/027558

(56) References cited:
- WO-A-01/20938
- US-A1- 2003 103 496
- KOODLI R ET AL: "FAST HANDOVERS AND CONTEXT TRANSFERS IN MOBILE NETWORKS" COMPUTER COMMUNICATION REVIEW, ASSOCIATION FOR COMPUTING MACHINERY. NEW YORK, US, vol. 31, no. 5, October 2001 (2001-10), pages 37-47, XP001115324 ISSN: 0146-4833
- "Handover requirement between UTRAN and GERAN or other radio system - TS 22.129 release V5.2.0" 3GPP TS 22.129 V5.2.0, XX, XX, June 2002 (2002-06), pages 1-22, XP002278094
- KEMPF J: "ProblemRFC 3374: Description: reasons for performing context transfers between nodes in an IP access network" NETWORK WORKING GROUP, September 2002 (2002-09), XP002278709
- "Issues relating to PS Handover on an enhanced Gb" 3GPP TSG GERAN ADHOC, XX, XX, 11 June 2002 (2002-06-11), pages 1-10, XP002272375

## Description

### FIELD OF THE INVENTION

The invention relates to a method and device for seamless handover of a communication link between a current network and a mobile device to a new network.

### TECHNOLOGICAL BACKGROUND

Wireless communication networks are becoming increasingly popular and co-exist with or even replace traditional fixed wireline communication networks. Wireless communication networks enable users to wirelessly transmit information to another user or device, such as during a telephone conversation between telephone terminals or a data communication between computing devices. A mobile telephone is one type of wireless communication device, widely used in voice and/or data communications. Similarly, a mobile computer is a type of wireless communication device, able to connect to wireless communication networks for data transmission and/or for assisting in voice communications with other communication or computing devices.

A number of different communication standards and technologies for wireless communication networks exist, offering different types of services, and networks operating according to the same or different standards may be co-located in the same geographical area or may partially overlap one another. Individual networks may also operate according to different communication standards, depending on an access technology desired by the mobile device. Likewise, mobile devices may have the capability to operate according to different standards, depending on the access technology offered by a wireless network.

A wireless communication network may have a cellular network structure, examples being mobile communication networks such as GSM (Global System for Mobile Communications), UMTS (Universal Mobile Telecommunications System), etc. A cellular network is generally sub-divided into individual cells in order to more efficiently use the available frequency spectrum for wireless transmissions between mobile devices. Two cells of the network cover given geographical areas, which may be adjacent to one another or at least partially, overlap one another.

When a mobile device engaged in a voice or data communication moves from one cell of the communication network to another cell of the communication network, a handover between these cells is performed, to hand over an ongoing communication from one cell to the other. As the individual cells of the communication network cover a larger geographical region, the mobile device can freely move within the coverage area of the network, without experiencing an interruption of an ongoing voice or data communication.

For example, if a user of a mobile device is engaged in a voice or data communication with another party, his mobile device may be connected through a first one of the cells of a serving communication network, so that communications are handled by this first cell. The other party involved in the communication may be directly connected to the network, or may be a subscriber of another network, e.g., another mobile communications network or a traditional fixed wireline communication network. When the mobile device subsequently moves into the coverage area of a second cell of the serving network, communications are handed over to the second cell of the network. After the handover, communications between the mobile device and the other party will be routed through the second cell of the network. According to another example, the mobile device may use a service provided by a service provider, such as an email service provided by an email service provider. Again, similar to the previous example, any communication data exchanged between the service provider and the mobile device are routed from the mobile device to a cell of the serving network and then to the service provider or vice versa. Further, if the mobile device now moves into the coverage area of another cell of the serving mobile communication network, all communications pertaining to the service from the service provider are handed over to the other cell.

Usually, in neither case the user of the mobile device will notice the handover, i.e., voice communications will be maintained uninterrupted and the used email service will be continued without interruption.

If, however, the mobile device moves beyond a coverage area of the serving network or current network, communications can no longer be handled in this network, and a handover to a second network or new network becomes necessary. For example, in order to move communications from a current network to a new network, a mobile device could terminate a communication path between the mobile device and the current network, and thereafter connect to the new network, in order to reestablish the communication path through the new network.

However, networks may have different operators, and handovers may have to be carefully negotiated. Further, as noted above, with a number of different communication standards coexisting, a handover of communications between different types of networks with different capabilities may be desired or required. Therefore, while handovers within one and the same serving network may not require a significant amount of time, as the mobile device is already registered with the serving network and, e.g., only moves from one cell of the network to another of the same network, inter-network handovers between two different communication networks may require a substantial amount of time. For example, the new network selected for taking over communications from the current network may be required to negotiate with the current network characteristics of the ongoing communications, such as of a voice communication or service provision, the networks may have to exchange subscriber and authorization information and the new network may have to reserve appropriate resources for handling the communications.

Further, while a handover of a simple voice communication between two different networks may be easy to handle, a handover of a more complex communication, e.g., pertaining to a service provided through the current network, may lead to a termination of services during the handover, as the new network may lack the necessary information and thus may not be in the position to seamlessly continue the service provision.

Koodli R et al: "Fast handovers and context transfers in mobile networks", Computer Communication Review, Association for Computing Machinery. New York, US, vol. 31, no. 5 October 2001(2001-10), pages 37-47 ; ISSN: 0146-4833 refers to handovers and context transfers in mobile networks between access routers offering Internet connectivity for mobile nodes. The handover can be performed between heterogeneous networks having access routers. During the handover the mobile node relinquishes a current link and establishes a new one to the new access router. Before the handover, IP packets are routed to the old access router and after the handover, IP packets are routed to the new access router. Connectivity latency is reduced by forming a new IP address before attachment to the new access router. During the handover context information is transferred. A context hierarchy is shown in Fig. 5 of this document, including a mobile node context portion, and context portions pertaining to the packet streams.

The document "Handover requirement between UTRAN and GERAN or other radio system - TS 22.129 release V5.2.0", 3GPP TS 22.129 V5.2.0, XX, XX, June 2002 (2002-06), pages 1-22, in particular page 6, line 1 - page 10, line 25, refers to handover requirements between UTRAN and GERAN and constitutes a 3GPP technical specification. This document specifies inter-network handovers with a continuity of an active call across a handover procedure and further the requirements for handover, including performing a context transfer between GERAN and UTRAN.

### SUMMARY OF THE INVENTION

It is therefore an object of the invention to provide for a seamless inter-network handover, i.e. a fast handover with seamless perception of service to the user.

The object of the invention is solved by the features of the independent claims. Advantageous embodiments of the invention are disclosed in the dependent claims.

An example is a handover of a communication link between a mobile device and a current network to a new network, the communication link providing a communication service to the mobile device, includes collecting context parameters at the current network, the context parameters characterizing the communication link and the communication service, transmitting at least a portion of the context parameters from the current network, and performing the handover of the communication link and the communication device to the new network based on the context parameters. The new network thus obtains information relevant for the handover in a handover preparation phase prior to actually performing the handover or switching of the communication link and therefore is in the position of suitably preparing the set-up of communications between the mobile device and the new network during or after the handover.

Advantageously, the example may include an operation to decide whether a context parameter is an independent context parameter, an independent context parameter being a context parameter applicable to at least one of the communication link and the communication service after the handover. Still further, the example may include an operation for deciding whether a context parameter is a dependent context parameter, a dependent context parameter being a context parameter that is not applicable to the communication link and communication service after the handover. Only the independent context parameters may be transmitted to the new network. Accordingly, only context parameters applicable to the communication link and/or service will be transferred, and a communication requirement and a time required for transferring the context parameters can be reduced.

The decision process for deciding independent and dependent context parameters may be based on at least one of an access technology at the current network and the new network, a stakeholder of the current network, a stakeholder of the new network, and a trust relationship between the current network and the new network.

According to another example, priorities may be assigned to the context parameters or to sets of the context parameters, and the context parameters or sets of context parameters may be transmitted to the new network based on the priority. Accordingly, more important context parameters can be transmitted at an earlier point in time.

For example, the context parameters required for establishing the communication link between the mobile device and the new network are given a highest priority, and context parameters required for maintaining the communication service after the handover may be given a second highest priority.

The priorities may be assigned based on a policy, and the priority may depend on at least one of a service type, a service level agreement, the new network, an access technology used, and a stakeholder of the new network.

Moreover, a context parameter can be constituted by at least one of the group consisting of a characteristic of the mobile device, a characteristic of the communication link, a characteristic of the communication service, and a characteristic of the current network and/or new network.

In order to appropriately schedule the context transfer, an available time before the handover takes place can be determined. Moreover, the portion of the context parameters to be transferred can be determined based on the available time and/or may be based on the priority given to the context parameters.

The new network may prepare the set-up of the communication link and the communication service based on the transferred context parameters.

Still further, a first stakeholder may operate the current network, and a second stakeholder may operate the new network.

According to another embodiment, a program may be provided, having instruction adapted to carry out the methods of any of the above operations. Further, a computer-readable medium may be provided, in which a program is embodied, where the program is to make a data processing device or group of data processing devices execute the method of any of the above operations. A computer program product may comprise the computer-readable medium.

Further, control means are provided for a handover of a communication link between a mobile device and a current network to a new network, the communication link carrying a communication service for the mobile device, including a context handler for collecting context parameters at the current network, the context parameters characterizing the communication link and the communication service, and for transmitting at least a portion of the context parameters from the current network to the new network, and a handover handler for performing the handover of the communication link carrying the communication service to the new network.

### BRIEF DESCRIPTION OF THE DRAWINGS

- Fig. 1: illustrates elements of a communication environment for a handover of a communication link established between a mobile device and a current network to a new network according to an embodiment of the invention;
- Fig. 2: illustrates operations of a method for handover of a communication link between a mobile device and a current network to a new network according to a an embodiment of the invention;
- Fig. 3: illustrates operations of a method for handover of a communication link between a mobile device and a current network to a new network according to another embodiment of the invention, particularly illustrating decision operations for categorizing context parameters;
- Fig. 4: illustrates operations of a method for handover of a communication link between a mobile device and a current network to a new network according to another embodiment of the invention, particularly illustrating operations to prioritise the context parameters;
- Fig. 5: illustrates operations of a method for handover of a communication link between a mobile device and a current network to a new network according to another embodiment of the invention, particularly illustrating transfer of context parameters in a limited amount of time; and
- Fig. 6: illustrates elements of a communication environment for a handover of a communication link between a mobile device and a current network to a new network according to another embodiment of the invention.

### DETAILED DESCRIPTION OF THE PREFERRED EMBODIMENTS

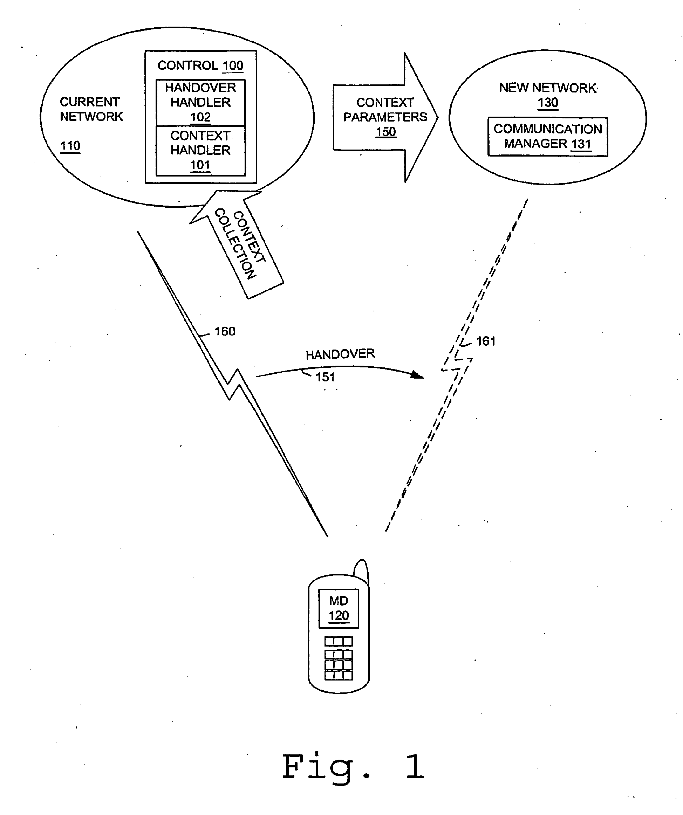

In the following, a first embodiment of the invention will be described with regard to Fig. 1.

Fig. 1 illustrates elements of a communication environment for seamless handover over a communication link between a mobile device and a current network to a new network.

Generally, a user of a mobile device may be engaged in a voice or data communication with another party while his mobile device may be connected to a current network, i.e. a serving communication network. Similarly, a user of the mobile device may use a service provided by a service provider, such as an email service provided by an email service provider or similar and any communication data exchanged between the service provider and the mobile device are routed through the current network.

When the mobile device moves within the coverage area of the current network, communications can generally be maintained through the current network, e.g. by handing over the communication between different coverage areas or cells of the current network.

If, however, the mobile device moves beyond a coverage area of the current network, communications can no longer be handled in the current network, and a handover to a new network becomes necessary. The current network and the new network will generally be operated by different owners or stakeholders, and may use the same or different access technologies. Nevertheless, it is also possible that the same stakeholder operates the current network and the new network or may even form separate portions of a larger network entity.

A so-called inter-network handover of a mobile device engaged in a communication with another party, such as another mobile device or a service provider, may occur between networks with adjacent geographical coverage areas. In this case communications between the mobile device and the current network are handed over to the new network, if the mobile device approaches the boundary of the coverage area of the current network.

Moreover, an inter-network handover may also take place between networks covering overlapping or even the same geographical regions, e.g., if a first network experiences an overload condition, if a communication connection with the current network is bad or interrupted, if a service requirement cannot be met, etc. Also, a handover of communications may be required in cases where a mobile user obtains services from a service provider and when the current network handling the communication is not or not any longer able to provide the requested service characteristics, such as bandwidth, service features and similar.

The communication environment of the embodiment of the invention shown in Fig. 1 enables the above described handovers between two networks. More precisely, the communication environment shown in Fig. 1 enables a seamless handover of a communication service from a current network to a new network by performing a preparatory phase of the handover. Seamless handover stands for a handover that does not involve a significant degradation of the communication link and communication service provided. Ideally, the user of the mobile device will not even notice the seamless handover. The preparatory phase of the handover allows the new network to more quickly take over communications during the actual handover and further enables the new network to readily continue the ongoing communications, e.g. a communication with another mobile device or a service provided by a service provider.

The preparatory phase of the handover includes transferring context information pertaining to the communication from the current network to the new network prior to performing the actual handover. Thus, as the new network already holds information characterizing e.g. the communication link to the mobile device to be handed over from the current network, the set-up of the communication link can be prepared and the actual handover can be performed at a reduced time delay. Moreover, as the new network may obtain context information on the communication service to be handed over, the set-up of the communication service can be prepared and an interruption of services can be avoided.

Referring now in detail to Fig. 1, the communication environment includes a current network 110, a mobile device 120, and a new network 130. Further, Fig. 1 illustrates control means 100 located at the current network, including context handler 101 and a handover handler 102, for controlling the operations to transfer context parameters to the new network and to hand over the communication link from the current network to the new network. The communication link is a connection between the mobile device and a network exchanging information, such as data or voice. While the control means 100 may be integrated into the current network, as shown in Fig. 1, it is also possible that the control means is at least partially integrated into the mobile device and/or located anywhere else in the communication environments. It is also possible that the communication means forms a separate entity.

The mobile device 120 has an active communication link 160 to the current network 110, the communication link providing a communication service, e.g., from a service provider, to the mobile device 120. For example, the service can be an email service, any kind of data service, a voice communication or service, and similar. The service may also be provided by another mobile device, such as another mobile telephone, engaged in a voice or data communication with the mobile device 120.

In Fig. 1 it is further assumed that the communication 160 between the mobile device 120 and the current network 110 is to be handed over to the new network 130, e.g., due to the above-outlined reasons such as a movement of the mobile device 120 into the coverage area of the new network 130. After the handover illustrated at 151 of the communication link to the new network, the communication service will be provided through the new network 130 and the switched over communication link to the mobile device 120, as illustrated at 161. After the handover, the communication link 160 between the mobile device 120 and the current network 110 is terminated.

However, different owners or stakeholders may operate the new network and the current network, and the new network may not be aware of the characteristics of the mobile device 120, the type of communication service provided, and of further elements or requirements of the communication link to be established.

Accordingly, prior to actually handing over the communication link 160 to the new network 130, it must be assured that the new network is put into the position to establish the communication link and the communication service swiftly during the handover, in order to avoid a noticeable delay or interruption or even termination of the communication service.

Therefore, prior to the handover, context parameters are transferred to the new network, allowing to suitably prepare the handover, which may then be carried out in a short amount of time and without degradation of the communication service provided. A context parameter is a piece of information pertaining to any characteristic of the communication environment, in which the communication to the mobile device 120 is integrated.

More precisely, a context parameter preferably characterizes the communication link and the communication service. For example, a context parameter may describe the technical characteristics or requirements to establish and/or maintain the communication link 160 between the mobile device 120 and the current network 110. Further, a context parameter may describe the technical characteristics or requirements to establish and/or maintain the communication service for the mobile device or a user of the mobile device.

The characteristics of the communication link between the mobile device and the current network may include information on an access technology to be used for the communication link, a data rate for transmission, information regarding error coding or error protection, and similar. Further, the characteristics of the communication link may include information on a communication channel which is to be used, a time slot, a frequency, an access code, and similar.

The context parameters may pertain to any characteristic of the communication service provided to the mobile device. As noted above, the communication service may include any type of data or voice service for the mobile device, provided, e.g., by a service provider or another mobile device. Consequently, the context parameters may describe the service type, application settings of a service application, user preferences, subscription information, authorizations for use of service features, user settings, and similar.

This may also include context parameters defining a characteristic of the mobile device, such as an identity of the mobile device, a device type, and similar. Further, context parameters may specify capabilities of the mobile device, e.g., processing capabilities, display capabilities such as a size of a display of the mobile device, display type, and similar. Further, the context parameters may specify authorization information, security information, and similar. Still further, the context parameters may specify service subscriptions of a user of the mobile device and any other information relevant with regard to the mobile device.

Context parameters may also include positional information of a mobile device, such as a location of the mobile device, a velocity of the mobile device, a moving direction of the mobile device, and similar. This information may enable a prediction of a location of the mobile device during the handover, signal strength to be used when establishing the communication,link 161 after the handover, etc.

Also, the context parameters may include characteristics of the current network and/or new network. This may include information on a trust relationship between the current network and a service provider, characteristics of the current network such as access technology used for the communication link, a type of network, and similar.

As noted above, in a preparatory phase of the handover, context parameters are transferred to the new network, so that the new network is capable of establishing the communication link and the communication service swiftly after or during the handover, in order to avoid a noticeable delay or interruption or even termination of the communication service.

More precisely, prior to handing over the communication link 160 between the mobile device 120 and the current network 110 to the new network 130, the communication link providing a communication service to the mobile device, a number of context parameters is collected at the current network 110, the context parameters preferably characterizing the communication link and the communication service. Further, at least a portion of the collected context parameters is then transmitted from the current network to the new network, and thereafter, the handover of the communication link and the communication service to the new network based on the context parameters is performed.

At the current network 110, a context handler 101 may be provided for collecting the context parameters characterizing the communication link and the communication service and may be responsible for transmitting at least portions of the context parameters to the new network, as indicated at 150. Further, at the current network a handover handler 102 may be provided for performing the handover of the communication link carrying the communication service to the new network 130.

At the new network 130, a communication manager 131 is provided for receiving the context parameters from the current network and for preparing the set-up of the communication link and the communication service based on the context parameters prior to the actual handover, for example including reservation of appropriate communication resources, negotiating service provision with the service provider or other mobile device and similar. After completing the set-up of the communication link and the communication service, e.g., upon a notice from the new network or at a dedicated point in time, the handover can be performed, as indicated at 151, and the communication link between the new network 130 and the mobile device 120 can be established. Further, based on the context parameters, the communication manager 131 can seamless continue the communication service carried by the communication link.

According to an advantageous embodiment, the context handler 101 may be adapted to perform a decision operation for determining whether a context parameter is an independent context parameter. An independent context parameter is a context parameter that will be applicable to the communication and/or the communication service after the handover. Moreover, the context handler may be adapted to perform a decision operation, whether a context parameter is a dependent context parameter, wherein a dependent context parameter is a context parameter that is not applicable to the communication link and the communication service after the handover. The decision process may generally be based on the communication standards or protocols used at the new network in comparison to the standards and protocols used at the current network. In case the communication techniques are similar or identical, parameters used at the current network for establishing and/or maintaining the communication link can be re-used at the new network. Further, the decision process may be based on an access technology at the new network in comparison to the current network and/or a stakeholder of the current network and a stakeholder of the new network. Further, a trust relationship between the current network and the new network can be used for she decision process. For example, some elements of a trust relationship, such as security parameters and similar, negotiated between the mobile device and the current network, can be re-used for establishing the communication link between the new network and the communication device.

After performing the decision operation, only independent context parameters may be transmitted to the new network, in order to save a network bandwidth.

According to another embodiment, the context handler may be adapted to assign priorities to the context parameters or to sets of the context parameters and to transmit the context parameters or sets of context parameters based on the assigned priority. The priority may take into account the importance of a context parameter, or a time sequence in which the context parameters are required at the new network for preparing the set-up of the communication link and communication service. According to an example, the context parameters required for establishing the communication link between the mobile device and the new network may be given a highest priority. Further, the context parameters required for maintaining the communication service after the handover may be given a second highest priority. Accordingly, it is first assured that the communication link can be suitably established between the new network and the mobile device and only then the communication service. The priority may depend on at least one of a service type, a service level agreement, the new network characteristics, an access technology, and a stakeholder of the new network.

According to another example, an available time before the handover takes place can be determined, in order to be able to estimate the amount of context information, which can possibly be transmitted from the current network to the new network before the actual handover is to happen. Consequently, the portion of the context parameters to be transferred to the new network may be determined based on the detected available time. Moreover, the portion of the context parameters to be transferred may be determined based on the priority and the determined available time.

The above elements of the communication environment and the above-outlined operations and functionality realized by the control means 100, the communication handler 131 at the new network and the mobile device enable a suitable preparation of the handover to the new network, such that the communication link and the communication service between the new network and the mobile device can be established at a reduced amount of time and without impairing the provision of the communication service or at least reducing the impairment of the service provision. A handover becomes possible between different networks, e.g., operated by different stakeholders, allowing a re-use of existing networks and exchanging communication traffic between different networks. Further, by providing a standardized solution for performing the handover and transferring the context parameters, existing communication protocols can be used to exchange the required context parameters in association with standardized messages between the current network and the new network.

In the following, the communication environment shown in Fig. 1 will be outlined in further detail. It is noted that the following constitutes examples only and should not be construed as limiting the invention.

The mobile device 120 shown in Fig. 1 is shown as a mobile telephone, but may instead also be any other kind of mobile communication device. For example, the mobile device may be a mobile computing device and similar, including laptop computers, PDAs (Personal Digital Assistance), etc. The mobile device 100 is involved in a one- or bi-directional communication with a service provider or any other element of a communication system, including another mobile or fixed wireline communication device.

The mobile device may operate in accordance with any standard, such as GSM, UMTS, D-AMPS and, may operate according to a wireless LAN standard or standard for wireless communication networks with distributed medium access control, including IEEE 802.11, "Wireless LAN and medium access control (MAC) and physical layer PHY) specification", 1999, 3G (Third Generation) or beyond 3G network, etc. A heterogeneous or ad-hoc network is a wireless network formed without a central administration or without a centralized management of communication resources, such as assignment of communication channels to communicating parties, etc.

The mobile device may be capable of implementing a plurality of standards or access technologies and thus be able to connect to wireless communication networks operating in accordance with different standards.

The mobile device may further be able to operate more than one RF connection to support the different standards. Further, this enables the mobile to maintain an active communication with the current network, while at the same time monitoring signals from other communication networks.

Here, RF connection stands for the capability of the mobile device to receive and analyze information transmitted on a particular frequency, time slot, with a particular code, and similar, depending on the access technology used by a network. For example, the mobile device may also be able to maintain at least one RF connection according to each access technology the mobile device supports, such as GSM, UMTS, D-AMPS, wireless LAN standards, and similar.

Communications carried out by or using the mobile device 120 may involve voice communications and/or data communications, e.g., in a regular telephone call or in a data communication between the service provider and the mobile device. Combined approaches are also conceivable.

The mobile device may obtain any kind of communication service from a service provider or other mobile device, such as a data service pertaining to news provision, email services, local event information, traffic information, booking services, banking transaction services, and similar. Also, the communication service may include access to a communication network of a company, including company-wide communication networks provided with a firewall for restricting access from the outside.

The mobile device 120 preferably includes a processor and a memory for storing coded instructions for implementing the communications functionalities of the mobile device, including functionality of the control means 100 for discovering the new network 130, instructing the current network to perform a handover, to provide information on the new network to the mobile device, and similar.

The mobile device may also include means to determine the necessity of an inter-network handover from the current network to a new network and may base the handover decision on information received from the current network and/or the new network. For example, the current network may suggest a handover if a communication load at the current network is excessive, or if resource requirements for the communication service have changed and cannot any longer be satisfied by the current network. Moreover, it is conceivable that the mobile device decides to perform the inter-network handover if communication requirements change and/or if the current network is unable to allocate sufficient or appropriate resources for the communication. For example, a transmission bandwidth requirement during a communication may change, if larger amounts of data need to be transmitted in the service application, or if communication requirements need to fulfill certain standards, such as a real-time requirement.

The current network 110 may constitute any kind of wireless communication network operating to any communication standard or combinations thereof, such as GSM, UMTS, D-AMPS, wireless LAN standards, 3G (Third Generation) or beyond 3G networks, etc. Still further, the current network may form at least part of a heterogeneous communication network, such as an ad-hoc communication network. It is possible that the current network integrates at least parts of the control means 100, and may include at least one processing unit and at least one memory for storing coded instructions making the processor, when loaded, to execute the above-outlined functionality of the control means and/or other functionality of the current network.

The new network 130, similar to the current network, may be constituted by any kind of wireless communication network. The current network and the new network may be operated by different stakeholders, i.e., different operating entities, however, it is also possible that the current network and the new network constitute different networks operated by the same stakeholder, or may even constitute different separate portions of a single communication network.

While it is possible that the current network and the new network operate according to the same communication standard, it is well possible that the current network and the new network operate according to different communication schemes. For example, the current network may operate according to the GSM standard, while the new network constitutes a heterogeneous communication network operating according to the IEEE 802.11 standard.

Before the handover indicated at 151, any data pertaining to the communication service provided by the service provider will be routed from the service provider to the current network 100 and through the communication link 160 to the mobile device 120 and vice versa. After the handover, data pertaining to the communication service will be forwarded from the service provider through the new network 130 and the communication link 161 to the mobile device 120.

Further, after detecting the necessity or desire to perform a handover, in a first sequence of operations, an appropriate new network may be selected from a number of candidates. The discovery may be executed at the current network and/or the mobile device. For example, the current network and/or the mobile device may discover the new network based on a beacon signal broadcasted by each network. Receiving the beacon signals from the nearby-located candidate networks, the current network and/or the mobile device may analyze the beacon signal to discover the identities of the nearby candidate networks.

After discovering a number of candidate networks, an appropriate one of the networks is selected as new network. The selection may be based on capabilities of the found networks, e.g., the ability to handle the communications after the handover, resource availability and similar. Further, the selection may be based on measured parameters, such as a location of the mobile device, a velocity of the mobile device, a moving direction, signal quality, and the network latency. Still further, the selection may be based on capabilities of the mobile device, e.g., capabilities to communicate with a candidate network, resources of the new network, a type of service provided by the service provider, and similar.

While the current network may perform the decision operation of the basis of the measured parameters and capabilities, it is also possible that the current network transmits information on the measured parameters and capabilities to the mobile device, e.g. upon a request from the mobile device, to enable the mobile device to perform the decision operation. Particularly in case the mobile device maintains two or more active RF connections, the mobile device may perform the decision operation itself.

Still further, the mobile device may request the current network to perform the decision operation if the mobile device does not receive information on the measured parameters or, according to still another alternative, the mobile device may request the current network to perform the decision operation and to transfer information on the measured parameters to the current network.

The embodiment of Fig. 1 illustrates operations to suitably prepare a handover of communications from a current network to a new network, in order to reduce a time required for the handover and further to avoid interruptions or a termination of a communication service.

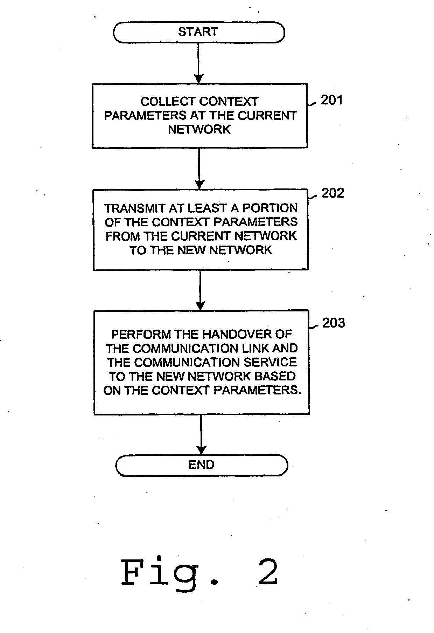

In the following, a further embodiment of the invention will be described with regard to Fig. 2.

Fig. 2 illustrates operations to hand over a communication link between a mobile device and the current network to a new network, the communication link providing a communication service to the mobile device. More precisely, Fig. 2 illustrates operations for suitably preparing the handover in a pre-handover phase by collecting context parameters, and transmitting at least a portion of the collected context parameters to the new network, enabling the new network to prepare the set-up of the communication link during or after the handover. The operation shown in Fig. 2 may be carried out using the communication environment shown in Fig. 1, however, Fig. 2 is not limited thereto.

In a first operation 201, the current network collects context parameters characterizing the communication link and the communication service. The context handler 101 of Fig. 1 may carry out the collection of context parameters, however, it is also possible that context parameters are collected at any other location or entity of the communication environment and then forwarded to the current network. For example, the mobile device may be instructed, e.g., by the current network, to collect context parameters pertaining to the communication link, including context parameters pertaining to the mobile device and/or the communication service. As noted above, the context parameters collected may include any information relevant in view of the communication link and communication service. The context parameters may be selected upon detecting the necessity or desire to perform a handover, or may be collected step by step at an earlier point in time, e.g., during the ongoing communication via the communication link between the mobile device and the current network.

The context parameters may be stored at a memory unit of the current network or at an external location. For example, the current network may store a set of context parameters in association with each ongoing communication such as the communication with the mobile device 120.

Obviously, in the complex environment of mobile communications and inter-network operability, the amount of context available in association with an ongoing communication may be very large, and transferring all of the context parameters to the new network will cause a delay in handover, which may be unacceptably long and may lead to a degradation or termination of the communication service provided to the mobile device 120.

It is therefore necessary to distinguish between context that is relevant for establishing the communication link and communication service between the mobile device 120 and the new network 130 after the handover, and context information, which predominantly pertains to the communication established between the mobile device and the current network.

After collecting the context parameters at the current network, in an operation 202, at least a portion of the context parameters is transmitted from the current network to the new network. The portion of the context parameters for transmission to the new network may simply be determined by the available amount of time, i.e., if the timing of the actual handover allows, the entire set of collected context parameters can be transferred. However, if the time is limited, only a portion of the context parameters may be transmitted. Further, as noted above, context parameters applicable for the communication link and communication service to be established between the new network 130 and the mobile device 120 may be transmitted, while a transmission of context parameters not applicable to the communication link and communication service may be omitted, as it will be detailed in further embodiments.

The context parameters may be collected in a context message or a sequence of context messages, which can be transmitted to the new network via any kind of transmission medium. For example, the context parameters or messages including context parameters may be transmitted via a wireless link between the current network and the new network or, alternatively, via a fixed wireline connection between the current network and the new network, or combinations thereof. Preferably, in order to transmit as much of the context parameters to the new networks as possible, any available transmission capacity may be used. Further, compression techniques may be used to reduce the amount of data for transmission, as known in the art.

The context parameters may be transmitted directly from the current network to the new network, or may be transmitted via an intermediate entity, for example a service provider maintaining a communication link towards the current network and towards the new network. Thus, existing communication capabilities of a service provider may be employed for transmitting context parameters.

Still further, the context parameters may be transmitted in association with existing messages of a communication protocol used for exchange of information between the current network and the new network. For example, the context parameters could be added to existing messages and/or data messages transmitted between the networks, thus requiring only minimal adaptations to a communication standard used, such as the GSM standard, the UMTS standard, the IEEE 802.11 standard, wireless LAN standard, and similar.

The new network 130, receiving the context parameters from the current network, can then proceed to prepare a set-up of the communication link and/or communication service to be established between the new network and the mobile device. The context parameters ideally already specify settings and requirements of the communication to be established with the mobile device, and enable the new network to already determine appropriate communication resources and allocate the same for use during and after the handover. The communication manager 131 of the new network may perform the above operations, i.e., prepare the set-up of the communication link and communication service. The set-up may include reserving appropriate communication resources, performing authorization or authentication checks, updating registries and similar. Further, the set-up may include contacting the service provider and already preparing the communication link between the new network and the service provider, so that a seamless communication service becomes possible, i.e., a smooth transition without service degradation.

After transmitting the context parameters and preparing the set-up of the communication link and communication service at the new network, the actual handover can take place. Therefore, in operation 203, the communication link and the communication service is handed over from the current network to the new network, and the new network continues the communication service using a communication link between the mobile device and the new network, such as the communication link 161.

The above operations illustrate the advantages of the invention in preparing the handover by transmitting context parameters from the current network to the new network. A smooth transfer of the communication from the current network to the new network becomes possible.

In addition to the above, prior to collecting and transferring context parameters, a new network may be selected from a plurality of candidates for new networks.

Further, in an example useful for understanding the invention a mutual trust relationship between the new network and the current network and/or a service provider may be established, to maintain a required security level.

Therefore, in a first operation a new network may be discovered. The discovery operation may include determining the identity of a new network to which the communication link is to be handed over; and will preferably include determining certain characteristics of the new network, such as access technology, capabilities, etc.

The discovery step may be carried out by a current network, such as the current network 110 shown in Fig. 1. For example, the current network may determine a number of neighboring or overlapping communication networks as possible candidates for the new network and may perform a decision operation based on the above-described determined parameters. Alternatively, a mobile device, such as the mobile device 120, may perform the discovery of operation, i.e., may collect information regarding potential new networks and may perform a selection step.

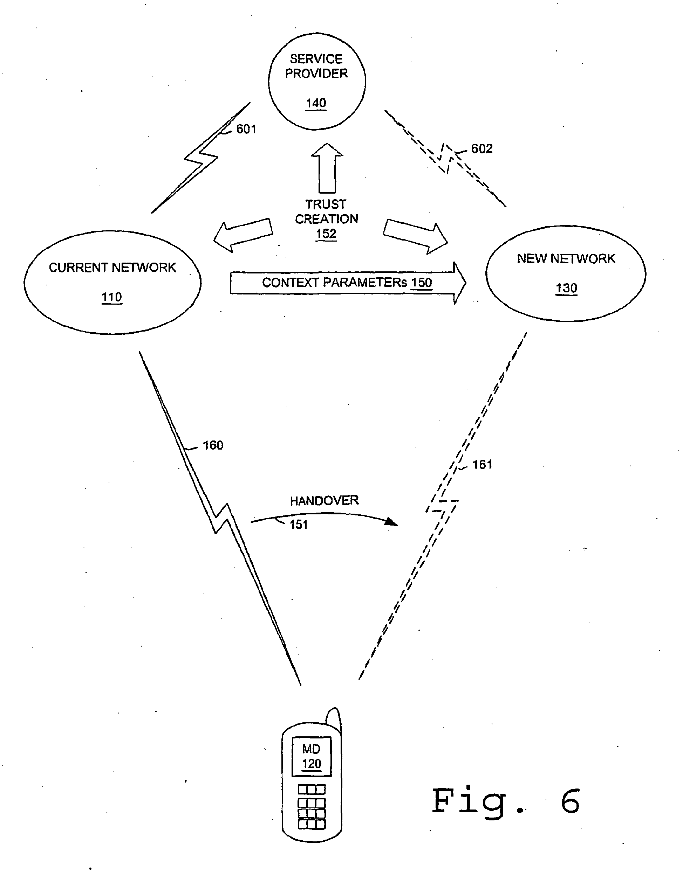

The current network and/or the mobile device can collect the information pertaining to the candidate new networks by monitoring beacon signals transmitted by each network, or by analyzing further information or messages transmitted by the candidate new networks. If the mobile device is capable of maintaining two or more RF connections, the mobile device may be actively participating in the communication service delivered by the service provider, such as the service provider 140 shown in Fig. 6, and at the same time may monitor information transmitted by further networks, e.g. networks using the same or different access technologies, as noted above. Similarly, if the current network performs the discovery step, the current network detects candidate new networks using different access technologies.

Information characterizing the new network, e.g., identity information, access technology used, etc., may be exchanged between the current network and the mobile device, to facilitate the handover procedure.

Thereafter, in another operation for preparing the actual handover, trust relationships may be established between the current network, the new network and the service provider. A trust relationship between two entities may include mutually verifying the identities for authentication purposes, exchanging security parameters for security data transfer, and determining the authorization of each entity to access the respective other entity.

According to another example useful for understanding the invention, the point-to-point (PTP) extensible authentication protocol (EAP) may be used to authenticate two entities for creation of trust. EAP defines an authentication framework for communication between peers over point-to-point links. Basically, one of the entities requests a proof of identity from the other entity, which proof may be, for instance, a simply one-time-password or some challenge-response type authentication, or a complex protocol like EAP TLS (Transport Layer Security) protocol, which performs negotiation as well as distribution of session keys. A request for authentication is sent from one of the two entities to the other and receives in return a response, which is validated by an authenticator. Still further, other authentication schemes for creating trust between two entities can be used, such as the RADIUS protocol, constituting an indirect authentication scheme, where authentication is run against a central server storing respective identity data for every known communicating entity. Still further, public/key cryptography can be used to build systems with mutual trust, such as the RSA algorithm, which can be used for encryption and decryption. Public/key cryptography uses a pair of keys, the public and private key. Either key can be used for encryption and respective decryption. Initially, key pairs are generated, the private key is stored with the respective entity, and the public key is made known to third parties, including the respective other entity. Using the private and public keys, a secure communication between the two entities becomes possible.

The trust relationships between the current network, the new network and the service provider may be created on-the-fly, i.e., during the preparatory phase of a handover, or may be created beforehand, e.g., upon network deployment, after reaching frame agreements between stakeholders of the current network, the new network and/or the service provider, or at any other point in time.

It is therefore possible that some mutual trust relationships will already exist, in which case the above operation includes determining the presence of trust relationships between the current network, the new network and the service provider, and the creation of missing trust relationships, as noted above.

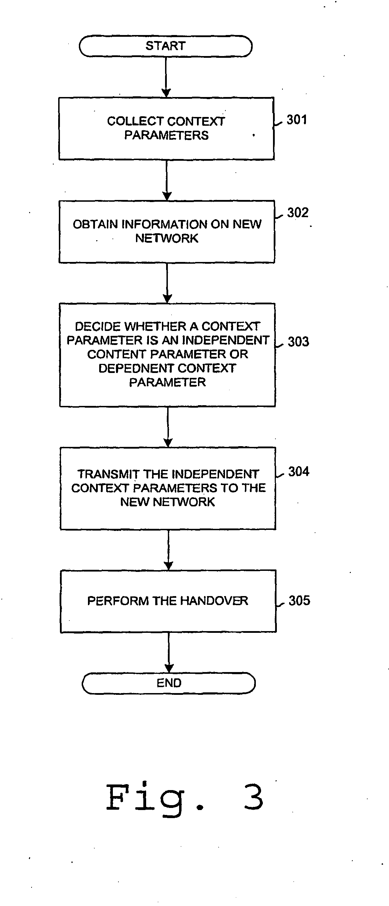

In the following a further embodiment of the invention will be described with regard to Fig. 3.

Fig. 3 illustrates operations of a method for handover of a communication link between a mobile device and a current network to a new network, particularly illustrating operations for identifying context parameters for transfer to the new network. The operations shown in Fig. 3 may be carried out using the communication environments shown in Fig. 1. However, Fig. 3 is not limited thereto.

In the embodiment of Fig. 3 it is again assumed that a communication link between a current network such as the current network 110 and a mobile device such as the mobile device 120, is to be handed over to a new network, such as the new network 130 of Fig. 1. Further, the mobile device is assumed to obtain a service from a service provider or another mobile device. This communication service, as noted before, may be any kind of voice or data service, including a regular voice communication, and more complex data applications such as email applications, banking applications, and similar. Before the handover the communication service is delivered to the mobile device through the current network, and the communication between the current network and the mobile device, and, after the handover, the communication service is delivered to the mobile device through the new network and the handed over communication link between the new network and the mobile device.

The decision that a handover is necessary or desired may have been reached as described with regard to previous embodiments, e.g. the decision to handover may be triggered by a reduced signal quality or service quality, as measured by the current network and/or the mobile device. The handover may also be triggered by cost considerations, if it is determined that another network provides the same service at reduced costs.

Further, an appropriate and new network may be selected from a number of available new networks, as detailed with other embodiments.

Starting from this basic scenario, after detecting or deciding the necessity or desire to perform a handover of the communication link to the new network, and before the handover takes place, a preparatory phase of the handover is conducted by collecting, in a first operation 301 shown in Fig. 3, context parameters characterizing the communication link between the current network and the mobile device and characterizing the communication service obtained by the mobile device are collected. The collection of context parameters may be conducted as described with regard to previous embodiments, such as operation 201 shown in Fig. 2.

As noted above, the preparatory phase of the handover can be conducted only during the generally short period of time between detecting the necessity or desire to perform a handover and the actual execution of the handover, i.e., the switching over of communications between the mobile device and the current network to the new network. As this amount of time is generally insufficient to transmit all context parameters, a decision operation needs to be performed for each of the context parameters collected in operation 301, whether the context parameter is an independent context parameter or a dependent context parameter.

However, before the decision which context parameters are to be transmitted to the new network, in an operation 302 information on the new network is obtained to facilitate the decision making process. This preferably includes all kind of information on the new network relevant for setting up a communication link and a communication service. The information on the new network may e.g. include an identity of the new network, a communication standard under which the new network is operating, access technologies supported by the new network and capabilities of the new network, including supported data rates, service provision capabilities and similar. Further, the information on the new network may characterize a stakeholder of the new network, and e.g. information on a trust relationship between the current network and the new network, or between the new network and a service provider. In general, the information obtained on the new network may include anything which supports a decision making process whether a context parameter collected at the current network is relevant for establishing the communication and/or communication service after the handover.

The information on the new network may be obtained based on a request directly from the new network, or may be obtained from any other source of information.

Then, in an operation 303 it is decided whether a context parameter is an independent context parameter, or a dependent context parameter. An independent context parameter is a context parameter applicable to the communication link to be established after the handover between the mobile device and the new network and/or the communication service as it is to be-carried out after the handover. Likewise, a context parameter is a dependent context parameter, if it is not applicable to the communication link and the communication service after the handover.

The decision operation performed in operation 303 will rely on the information on the new network obtained in operation 302, if compared with the corresponding features or functionality of the current network. Thus, the decision whether a context parameter is an independent context parameter or a dependent context parameter will also depend on a type of the current network, and access technology used by the current network, capabilities of the current network, a stakeholder of the current network and similar. For example, if the current network and the new network operate under the same communication standard, all context parameters relating to establishing a communication link and a communication service to the mobile device under a certain standard will be applicable at the new network after the handover, i.e., those context parameters will constitute independent context parameters. Similarly, if a type of a communication channel or an access technology used for a communication channel before and after the handover can be the same, all context parameters describing the type of communication link and access technology can be identified as independent context parameters. Further, if a mutual trust relationship exists between the current network and the new network, security parameters, identification information authorization and authentication information of the mobile device may at least partially be identified as independent context parameters as they can be re-used at the new network due to the fact that trust exists between the current network and the new network. Similarly, this supplies in cases where a mutual trust relationship between the current network and a further entity and the further entity and the new network exists. Further, if the same stakeholders operate the current network and the new network, all stakeholder related context parameters, e.g. proprietary features, settings, and similar used by the stakeholder, can be identified as independent context parameters. Furthermore, if the stakeholders of the current network and the new network are different, a mutual relationship between the stakeholder of the current network and the stakeholder of the new network may allow defining independent context parameters. Moreover, if the service provision by the current network and the new network, i.e. the provision of a communication service to the mobile device, corresponds to one another, all context parameters pertaining to the communication service can be identified as independent context parameters.

Likewise, based on the above decision process for independent context parameters, all context parameters which are not applicable to the communication and communication service after the handover can be identified as dependent context parameters, i.e., dependent solely on the communication link and service provision at the current network.

The independent context parameters and dependent context parameters may be stored in different sets of context parameters in a storage device of e.g. the current network.

Optionally, after deciding dependent and independent context parameters, context transfer policies may be applied, in order to further filter the independent context parameters. A policy to further select independent context parameters, i.e. to decide whether portions of the independent context parameters should be retained, can be determined by the stakeholder or operator of the current network. For example, certain proprietary context information relating to security aspects or proprietary functionality of the current network may be retained. Further, regulations or legislation may prohibit transmission of certain context parameters to third parties.

All independent context parameters, which should be retained, based on the above outlined policies, can be then removed from the elected set of independent context parameters. Here thereafter in an operation 304 only the independent context parameters are transmitted to the new network. Accordingly, the amount of context parameters for transmission can be reduced to only those context parameters which are applicable after the handover.

The above outlined procedure significantly reduces the amount of context parameters for transfer to the new network, and thus allows to optimally use the time available between the handover decision and the actual handover for context parameter transfer.

After the transfer of the context parameters, as outlined with regard to previous embodiments, the new network appropriately prepares the set-up of the communication link and the communication service, e.g. including reservation of appropriate communication resources, negotiating service provision with the service provider or other mobile device and similar.

Thereafter, the actual handover is performed in an operation 305, as detailed before.

The above embodiment lines elements of the invention allowing to reduce the amount of context parameters to be transferred, in order to more efficiently use the available time before the handover.

The operations outlined above with regard to Fig. 3 may be carried out by the control means 100 of the current network. More precisely, the context handler may be adapted to collect the context parameters, as described in operation 301, obtain information on the new network, as outlined in operation 302, identify independent and dependent context parameters, as detailed in operation 303, and, the context handler may be adapted to transmit the independent context parameters to the new network as outlined in operation 304. The handover handler may be adapted to perform the handover as outlined in operation 305.

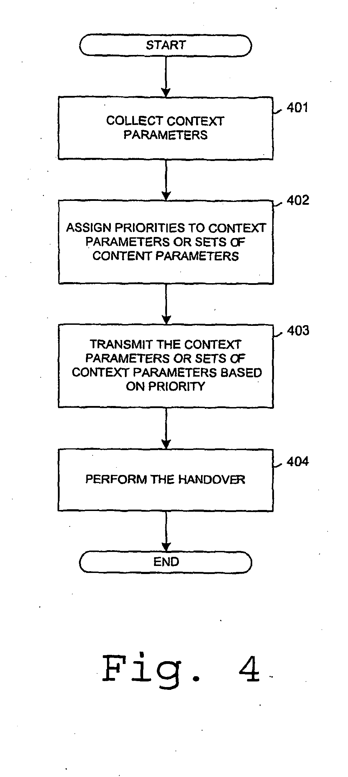

In the following a further embodiment of the invention will be described with regard to Fig. 4.

Fig. 4 illustrates operations for handing over a communication link between a current network and a mobile device to a new network, particularly illustrating operations to further make efficient use of a time for transferring context parameters.

The operations of Fig. 4 may be carried out using the communication environment of Fig. 1, however, Fig. 4 is not limited thereto.

As outlined above with regard to Fig. 3, by transmitting independent context parameters the amount of context parameters to be transferred can be significantly reduced. However, there may still not be sufficient resources available for transfer all of the independent context parameters from the current network to the new network in the short available amount of time. Therefore, Fig. 4 further describes the assignment of priorities to context parameters for transfer to the new network.

In a first operation 401 context parameters are collected, as e.g. outlined with regard to previous embodiments.

Thereafter, in an operation 402 priorities are assigned to context parameters or sets of context parameters. Priorities will preferably assigned to context parameters in order to reflect an importance of the context parameters for establishing the communication link and/or communication service during or after the handover. Accordingly, the highest priorities may be assigned to context parameters that are essential for establishing the communication link and/or communication service. Further, a high priority may be given to those context parameters that allow to significantly reduce communication and/or computation efforts for establishing the communication link and/or communication service during or after the handover. In an example, context parameters required for establishing the communication link between the mobile device and the new network are given a highest priority, reflecting the fact that for a successful handover it is most important to establish the communication between the mobile device and the new network. Further, context parameters required for maintaining the communication service during or after the handover are given a second highest priority. This reflects the fact that the communication service may be also negotiated or established during the handover in a set-up procedure between the mobile device and the service provider, if a working communication link between the mobile device and the new network was successfully established.

Similar to the selection of independent context parameters based on policies, the assignment of priorities to context parameters may be based on policies. These policies may be defined by a stakeholder of the current network and may also be based on the user preferences.

For example, a policy may give highest priority to context parameters related to security aspects, e.g. for certain services such as banking transactions or any other applications for handling confidential data. Such a policy would put security first, i.e., an establishment of a communication link and communication service without a certain security level would not be desired.

Moreover, the priority assignment may depend on a service type. For example, certain service may require a minimum data rate or may require certain settings to successfully establish the communication service, such as a real time data or voice communication. Other services may be less sensitive to a lack of context settings during the handover, such as web browsing applications and similar. Moreover, a priority may depend on a service level agreement, i.e., communication services requiring a high level of security for handling e.g. confidential data, may require a high priority for security related context parameters. Still further, the priority may depend on the characteristics of the new network. For example, the new network may or may not have the capability to establish a communication link or communication service without certain types of context parameters. A new network may have a capability to negotiate certain settings for a communication link or a service and may thus not necessarily require certain context parameters, while another network may not have the above capability and thus may require these context parameters.

Still further, the priority may depend on an access technology use, e.g. certain access technologies may have a hard requirement for certain context parameters. Still further, a priority may depend on a stakeholder of the new network and may reflect certain service provision policies of the new network and similar.

Thereafter, the prioritised context parameters are arranged for transmission to the new network in the order of their priority, i.e., context parameters with the highest priority are scheduled for transmission before context parameters having a lower priority.

Further, context parameters may be arranged in groups and a priority may be assigned to individual groups of context parameters.

Therefore, security related context parameters could be formed in one group, service related context parameters could be collected in another group, communication link related context parameters could be arranged in another group and an authorization or user parameters could be arranged in still another group of context parameters. Based on the above procedure, priorities could then be assigned to the groups of context parameters, and the groups of context parameters could be arranged for transmission in accordance with their priority.

The context parameters or groups of context parameters are then transmitted in the order of their priority to the new network.

Further, a priority of the context parameters may depend on a time required for performing processing operations in association with the context parameters at the new network. For example, certain context parameters may require extensive computations or negotiations at the new network in the preparatory phase of the handover, such as security settings, authorization procedures and similar, while other context parameters may only refer to less computational efforts at the new network, e.g. service settings and similar. Accordingly, context parameters requiring a large amount of processing time at the new network shall be associated with a high priority, while context parameters require less computations at the new network can be assigned with a lower priority.

Thereafter, in an operation 404 the handover is performed, as noted with regard to previous embodiments.

The operations outlined above with regard to Fig. 4 may be carried out by the control means 100 of the current network. More precisely, the context handler may be adapted to collect the context parameters, to assign priorities in operation 402 and to transmit the context parameters based on the priorities in operation 403.

It is noted that the operations of Fig. 4 may be combined with the operations of.Fig. 3, i.e., priorities may be assigned to independent context parameters or groups of independent context parameters, or to all available context parameters.

The embodiment of Fig. 4 illustrates how the time available between a handover decision and the actual handover can be more efficiently used for the transfer of context parameters. First context parameters with the highest priority are transmitted, and thus, if the time before the actual handover elapses, the most relevant context parameters were transferred.

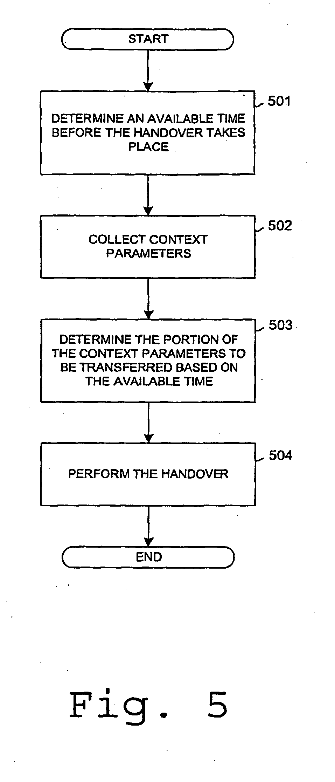

Following a further embodiment of the invention will be described with regard to Fig. 5.

Fig. 5 illustrates operations for handover of a communication link between a mobile device and a current network to a new network, particularly outlining scheduling of context transfer in the amount of time available before a handover.

The operations of Fig. 5 may be carried out by the communication environment shown in Fig. 1, however, Fig. 5 is not limited thereto.

In the embodiment of Fig. 5 it is assumed that at one point a decision to perform a handover was reached. The mobile device or the communication network, as outlined with regard to previous embodiments, may trigger this decision. Generally, a handover may be performed voluntarily or may be required in order to avoid a service or communication link termination. A voluntary handover may be based on considerations like improving a communication service, reducing costs and similar, and therefore the time between deciding to perform a handover and the schedule time for the actual handover may be set to a desired value. This value may set such that all relevant or necessary context parameters can be transmitted, and thus the time for the actual handover may be set based on the amount of context parameters, a transmission capacity for context parameters and similar, so that all context parameters scheduled for transmission can actually be transmitted.

However, there are certain situations, where a time between a handover decision and the actual handover can not be arbitrarily set, e.g., if a signal quality or service quality rapidly decreases. For example, due to a rapid movement or shielding by buildings and similar, a signal and/or service quality may be reduced and a handover must be triggered. In this case there may be a short amount of time available between the decision and a termination of the communication link or service due to insufficient signal or service quality.

Therefore, in an operation 501 an available time between a handover decision and the actual handover is determined. The current network and/or the mobile device may determine the available time.

Further, in an operation 502 the context parameters are collected, as detailed with regard to previous embodiments.

It is noted that operations 501 and 502 may be carried out concurrently, in order to more efficiently use the available time.

Thereafter, in an operation 503 a portion of the content parameters for transfer is determined based on the available time before the actual handover. If the portion of the content parameters may be selected based on the assigned priority, based on policies, based on the distinction between dependent and independent context parameters of combinations thereof, as outlined with regard to previous embodiments. The portion of context parameters transferable before the handover will depend on the available time and the available transmission capacity. The transmission may be determined by detecting a transmission capacity of a communication channel available for transferring the context parameters. In order to increase the transmission capacity, multiple transmission channels may be identified, e.g. a direct communication channel between the current network and the new network, and further communication channels, e.g. via further elements of the communication environments, including a service provider or mobile devices. The portions of the context parameters determined to be transferable before the actual handover can then be arranged in sets and can be scheduled for transmission, e.g. in association with existing messages of the communication environment, as detailed before.

According to another embodiment, after reaching the basic decision to perform a handover, e.g., as outlined above, the actual handover may have to be performed very soon, e.g. if the mobile device travels at a high velocity towards the boundary of the coverage area of the current network, to avoid a termination of the communication service, and a transfer of context parameters must be scheduled based on the available time. However, if the actual handover is not determined by a hard requirement, an optimum point in time for the handover can be chosen. For example, after determining a target network for handover, a signal quality of the communication link between the mobile device and the current network may be determined and monitored, and the handover to the target network may be performed when the signal quality, service quality or any other link parameter is low or falls below a threshold, allowing a maximum time for the transfer of context parameters. Likewise, if the signal quality, service quality or any other link parameter is high or remains above the threshold, the execution of the actual handover could be put on hold, e.g. allowing a full transfer of context parameters.

According to another example, in a network overlay situation, an upward vertical handover VHO, e.g. to a foreign network, should be delayed as long as possible, for context transfer and due to service quality considerations, while a downward VHO, e.g. to an own network, should be performed as soon as possible after transfer of necessary context.

The portion of the context parameters being transferable prior to the handover may preferably also take into account a time of preparing the set-up of the communication link and/or communication service at the new network, as required prior to the handover in the preparatory phase.

Thereafter, in an operation 504 the handover is performed, as noted with regard to previous embodiments.

The operations outlined above with regard to Fig. 5 may be carried out by the control means 100 of the current network. More precisely, the context handler may be adapted to perform the operation 501 for determining the available time before the handover, to collect context in the operation 502 and to determine the transferable portion of the context in operation 503.

In the following a further embodiment of the invention will be described with regard to Fig. 6.

Fig. 6 illustrates elements of a communication environment similar to the one shown in Fig. 1, additionally showing a service provider 140, providing a communication service to the mobile device. The remaining elements of Fig. 6 are as shown in Fig. 1, and therefore a further detailed description thereof is omitted at this point.

In Fig. 6 it is presumed that the service provider 140 provides a communication to the mobile device 120. The communication service, as noted before, may include any kind of voice and/or data service. Before the handover, the communication service is considered to be provided via the current network 110 via a communication link 601 between the service provider and the current network and a communication link 160 between the current network and the mobile device. The communication 601 may be a wireless link, as illustrated in Fig. 6. However, may also be at least partially a wire line connection.

After the handover, the communication service will be provided to the mobile device via the new network 130, through a communication link 602 between the service provider and the new network and a communication link 161 between the new network and the mobile device.

In the preparatory phase of the handover, the context parameters will be transferred from the current network to the new network, as indicated at 150. Using the context parameters, the new network will perform a preset-up of the communication links 602 and 161. For example, the communication 602 between the service provider and the new network may be made fully operable in the preparatory phase, if the service provider is able to establish more than one communication link at the same time. In this case communications will still be handled via the communication link 601, however, the communication link 602 will also be operable.

Then, during the actual handover, only the communication link 160 is switched over to the communication link 161, and a seamless transfer of the communication service can be obtained.

If the mobile device is capable of establishing more than one RF connection, it is also possible that the communication link 161 is also made operable in the preparatory phase of the handover, in which case the mobile device maintains the communication service via the communication link 160, and already holds the communication 161 in an operable state. Then, during the handover, the communications could simply be switched over to the new network. It is also possible, that for a brief amount of time data pertaining to the communication service are transmitted via both, the current network and the new network, and that for completing handover the communication links 601 and 160 are simply switched off. In this case a fully seamless handover becomes possible.

The service provider 140 may be constituted by any kind of entity providing any kind of communication service to subscribers, e.g., to a mobile device, through a wireless network such as the current network 110 and the new network 130. As noted above, the communication service may pertain to any kind of data or voice service, e.g., a service to which the user of the mobile device 120 has subscribed. The service provider may form part of one of the networks, e.g., the current network or the new network, or may form a separate entity, communicating with the current network and the new network to wireline or wireless communication links. While the service provider may be a larger organization serving a large number of service subscribers, it is also possible that a communication device constitutes the service provider, providing a service to the mobile device 120. For example, the service provider could be a home computer, a PDA, a laptop computer, or any other mobile device exchanging data with the mobile device 120.

According to another example useful for understanding the invention, in the preparatory phase of the handover, the existence of a trust relationship between the current network 110 and the new network 130 may be determined, as indicated at 152 in Fig. 6. This determination operation may be performed by the current network, reviewing, e.g., registration information, in order to determine whether at a previous point in time a trust relationship has been established between the current network and the new network.

For example, the trust relationship could have been established at an earlier point in time, e.g., during a previous handover procedure, or on network deployment.

The determination operation may include the exchange of messages between the current network and the new network in order to determine an existing trust relationship, and/or to verify an existing trust relationship. This may involve the exchange of security parameters for verification purposes.

Similarly, in another operation it may be determined whether a trust relationship exists between the current network 110 and the service provider 140. In this case, the current network and/or the service provider may determine the existence and/or verify a mutual trust relationship.

Still further, similar operations may be performed to determine the existence and/or to verify a trust relationship between the service provider 140 and the new network 130.

The above operations for determining the existence of mutual trust relationships between the current network, the service provider and the new network, and the verification of the mutual trust relationships may be handled by the control means 100, which, as noted in connection with Fig. 1, may form a separate entity and/or which may be at least partially realized as an integral part of the current network and/or the new network and/or the service provider.

If the determination operation reveals that only some of the mutual trust relationships exist, the missing trust relationships can be created.

In a first example useful for understanding the invention, a mutual trust relationship exists between the current network 110 and the service provider 140, and a mutual trust relationship exists between the current network 110 and the new network 130. However, between the service provider 140 and the new network 130, a mutual trust relationship could not be detected. In this case, the current network 110, having mutual trust relationships with the service provider and the new network, will mediate between the service provider and the new network, in order to also create a trust relationship between the service provider and the new network. The mediation may include an exchange of trust-related information and parameters with the service provider and the new network, including security parameters. The creation of the trust relationship between the service provider and the new network may involve a direct transmission of information between the service provider and the new network, however, in an alternative it is also possible that the trust relationship between the service provider and the new network is generated solely based on an exchange of trust-related information between the current network and the service provider on the one hand and on the other hand between the current network and the new network.

In another example useful for understanding the invention, mutual trust relationships exist between the current network 110 and the service provider 140, and between the service provider 140 and the new network 130. However, a mutual trust relationship between the current network and the new network does not yet exist. In this scenario, similar to the above example, the service provider mediates for generating a trust relationship between the current network and the new network.

If more than one mutual trust relationship between the current network, the new network and the service provider is missing, a determination operation can be performed, in order to determine another entity of the network environment having mutual trust relationships for mediating in the creation of the missing trust relationships. This further entity could, e.g., be another network or another service provider.

According to another example useful for understanding the invention, the new network contacts the service provider about trust relation information in order to further facilitate the creation of trust. For example, the new network may contact the service provider regarding trust information of a trust relationship between the service provider and the current network.

After the above-outlined determination operations for determining and/or creating mutual trust relationships between the current network, the new network and the service provider, the context transfer takes place between the current network and the new network, e.g., as outlined above.

The operations described above in Fig. 6 may be performed by the control means 100, which may be at least partially integrated into the current network 110, the mobile device 120, the new network 130, and the service provider 140, or may form a separate entity.

It is noted that a program or programs may be provided having instructions adapted to cause a data processing device or a network of data processing devices to realize elements of the above embodiments and to carry out the method of at least one of the above operations.

Also, a computer-readable medium may be provided having a program embodied thereon, where the program is to make a computer or a system of data processing devices to execute functions or operations of the features and elements of the above-described examples. A computer-readable medium can be a magnetic or optical or other tangible medium on which a program is recorded, but can also be a signal, e.g. analog or digital, electronic, magnetic or optical, in which the program is embodied for transmission. Further, a data structure or a data stream may be provided including instructions to cause data processing means to carry out the above operations. The data stream or the data structure may constitute the computer-readable medium. Still further, a computer program product may be provided comprising the computer-readable medium.

## Claims

1. Method for a handover of a communication link (160) between a mobile device (120) and a current network (110) to a new network (130), the communication link (160) providing a communication service to the mobile device, including:
collecting context parameters at the current network (110), the context parameters characterizing the communication link (160) and the communication service;
assigning priorities to the context parameters or sets of context parameters;
determining the available time between a handover decision and an actual handover execution;
determining a portion of the context parameters to be transferred based on the available time and based on the assigned priorities;
transmitting the portion of the context parameters from the current network (110) to the new network (130); and
performing the handover of the communication link (160) and the communication service to the new network (130) based on the context parameters.

2. Method of claim 1, including deciding whether a context parameter is an independent context parameter, wherein an independent context parameter is a context parameter applicable to at least one of the communication link (160) and communication service after the handover.

3. Method of one of the preceding claims, including deciding whether a context parameter is a dependent context parameter, wherein a dependent context parameter is a context parameter which is not applicable to the communication link (160) and communication service after the handover.

4. Method of claim 2, including transmitting only the independent context parameters to the new network (130).

5. Method of one of the claims 2 - 4, wherein the decision process is based on at least one of:
- an access technology at the current network (110) and the new network (130);
- a stakeholder of the current network;
- a stakeholder of the new network (130); and
- a trust relationship between the current network (110) and the new network (130).

6. Method of one of the preceding claims, wherein the priorities are assigned based on a policy.

7. Method of one of the preceding claims, wherein the context parameters required for establishing the communication link (160) between the mobile device (120) and the new network (130) are given a highest priority.

8. Method of one of the preceding claims, wherein the context parameters required for maintaining the communication service after the handover are given a second highest priority.

9. Method of one of the preceding claims, wherein the priority depends on at least one of:
- a service type;
- a service level agreement;
- the new network (130);
- an access technology; and
- a stakeholder of the new network (130).

10. Method of one of the preceding claims, wherein a context parameter can be constituted by at least one of the group consisting of:
- a characteristic of the mobile device;
- a characteristic of the communication link (160);
- a characteristic of the communication service;
- a characteristic of the current network (110) and/or new network (130).

11. Method of one of the preceding claims, wherein the new network (130) prepares the set up of the communication link (160) and the communication service based on the context parameters.

12. Method of one of the preceding claims, wherein a first stakeholder operates the current network (110) and a second stakeholder operates the new network (130).

13. A program having instructions adapted to carry out the method of any one of claims 1 to 12.

14. A computer readable medium, in which a program is embodied, wherein the program is to make a data processing device execute the method of any one of claims 1 to 12.

15. A computer program product comprising the computer readable medium of claim 14.

16. Control means for a handover of a communication link (160) between a mobile device (120) and a current network (110) to a new network (130), the communication link (160) carrying a communication service to the mobile device, including:
a context handler (101) for collecting context parameters at the current network, the context parameters characterizing the communication link (160) and the communication service, for assigning priorities to the context parameters or sets of context parameters, determining an available time between the handover decision and the actual handover execution, determining a portion of the context parameters to be transferred based on the available time and based on the assigned priorities, and for transmitting the portion of the context parameters from the current network (110) to the new network (130); and
a handover handler (102) for performing the handover of the communication link (160) carrying the communication service to the new network (130).

17. Control means of claim 16, wherein the context handler (101) is adapted to decide whether a context parameter is an independent context parameter, wherein an independent context parameter is a context parameter applicable to at least one of the communication link (160) and communication service after the handover.

18. Control means of one of the claims 16 and 17, wherein the context handler (101) is adapted to decide whether a context parameter is a dependent context parameter, wherein a dependent context parameter is a context parameter which is not applicable to the communication link (160) and communication service after the handover.

19. Control means of claim 16, wherein the context handler (101) is adapted to transmit only the independent context parameters to the new network (130).

20. Control means of one of the claims 16 - 19, wherein the context handler (101) is adapted to perform the decision process based on at least one of:
- an access technology at the current network (110) and the
new network (130);
- a stakeholder of the current network;
- a stakeholder of the new network (130); and
- a trust relationship between the current network (110) and the new network (130).

21. Control means of one of the claims 16 - 20, wherein the priorities are assigned based on a policy.

22. Control means of one of the claims 16 - 21, wherein the context handler (101) is adapted to assign to the context parameters required for establishing the communication link (160) between the mobile device (120) and the new network (130) a highest priority.

23. Control means of one of the claims 16 - 22, wherein the context handler (101) is adapted to assign to the context parameters required for maintaining the communication service after the handover a second highest priority.

24. Control means of one of the claims 16 - 23, wherein the context handler (101) is adapted to assign the priority depending on at least one of:
- a service type;
- a service level agreement;
- the new network (130);
- an access technology; and
- a stakeholder of the new network (130).

25. Control means of one of the claims 16 - 24, wherein a first stakeholder operates the current network (110) and a second stakeholder operates the new network (130).

## Patentansprüche

1. Verfahren für ein Handover einer Kommunikationsverbindung (160) zwischen einer Mobilvorrichtung (120) und einem gegenwärtigen Netz (110) zu einem neuen Netz (130), wobei die Kommunikationsverbindung (160) der Mobilvorrichtung einen Kommunikationsservice bereitstellt, umfassend:
Sammeln von Kontextparametern in dem gegenwärtigen Netz (110), wobei die Kontextparameter die Kommunikationsverbindung (160) und den Kommunikationsservice kennzeichnen;
Zuweisen von Prioritäten zu den Kontextparametern oder Kontextparametersätzen;
Bestimmen der verfügbaren Zeit zwischen einer Handover-Entscheidung und der tatsächlichen Handover-Ausführung;
Bestimmen eines zu transferierenden Anteils der Kontextparameter auf Grundlage der verfügbaren Zeit und auf Grundlage der zugewiesenen Prioritäten;
Übertragen des Anteils der Kontextparameter von dem gegenwärtigen Netz (110) zu dem neuen Netz (130); und
Durchführen des Handovers der Kommunikationsverbindung (160) und des Kommunikationsservice an das neue Netz (130) auf Grundlage der Kontextparameter.

2. Verfahren nach Anspruch 1, einschließlich einem Entscheiden, ob ein Kontextparameter ein unabhängiger Kontextparameter ist, wobei ein unabhängiger Kontextparameter ein Kontextparameter ist, der nach dem Handover auf zumindest einen von der Kommunikationsverbindungen (160) und dem Kommunikationsservice anwendbar ist.

3. Verfahren nach einem der vorhergehenden Ansprüche, einschließlich einem Entscheiden, ob ein Kontextparameter ein abhängiger Kontextparameter ist, wobei ein abhängiger Kontextparameter ein Kontextparameter ist, der nach dem Handover nicht auf die Kommunikationsverbindung (160) und den Kommunikationsservice anwendbar ist.

4. Verfahren nach Anspruch 2, einschließlich eines Übertragens von nur den unabhängigen Kontextparametern an das neue Netz (130).

5. Verfahren nach einem der Ansprüche 2 - 4, wobei der Entscheidungsprozess basiert auf zumindest einem von:
- einer Zugangstechnologie in dem gegenwärtigen Netz (110) und dem neuen Netz (130);
- einem Interessenvertreter des gegenwärtigen Netzes;
- einem Interessenvertreter des neuen Netzes (130); und
- einer Vertrauensbeziehung zwischen dem gegenwärtigen Netz (110) und dem neuen Netz (130).

6. Verfahren nach einem der vorhergehenden Ansprüche, wobei die Prioritäten auf Grundlage einer Richtlinie zugewiesen werden.

7. Verfahren nach einem der vorhergehenden Ansprüche, wobei den Kontextparametern, die zum Errichten der Kommunikationsverbindung (160) zwischen der Mobilvorrichtung (120) und dem neuen Netz (130) erforderlich sind, eine höchste Priorität gegeben wird.

8. Verfahren nach einem der vorhergehenden Ansprüche, wobei den Kontextparametern, die zum Aufrechterhalten des Kommunikationsservice nach dem Handover erforderlich sind, eine zweithöchste Priorität gegeben wird.

9. Verfahren nach einem der vorhergehenden Ansprüche, wobei die Priorität abhängt von zumindest einem von:
- einem Servicetyp;
- einer Servicelevelvereinbarung;
- dem neuen Netzwerk (130);
- einer Zugangstechnologie; und
- einem Interessenvertreter des neuen Netzes (130).

10. Verfahren nach einem der vorhergehenden Ansprüche, wobei ein Kontextparameter durch zumindest einen aus der Gruppe konstituiert werden kann, die besteht aus:
- einem Merkmal der Mobilvorrichtung;
- einem Merkmal der Kommunikationsverbindung (160);
- einem Merkmal des Kommunikationsservice;
- einem Merkmal des gegenwärtigen Netzes (130) und/oder neuen Netzes (130).

11. Verfahren nach einem der vorhergehenden Ansprüche, wobei das neue Netz (130) den Aufbau der Kommunikationsverbindung (160) und des Kommunikationsservice auf Grundlage der Kontextparameter vorbereitet.

12. Verfahren nach einem der vorhergehenden Ansprüche, wobei ein erster Interessenvertreter das gegenwärtige Netzwerk (110) betreibt und ein zweiter Interessenvertreter das neue Netz (130) betreibt.

13. Programm mit Instruktionen, die ausgelegt sind zum Ausführen des Verfahrens nach irgendeinem der Ansprüche 1 bis 12.

14. Computer-lesbares Medium, in dem ein Programm enthalten ist, wobei das Programm eine Datenverarbeitungsvorrichtung das Verfahren nach irgendeinem der Ansprüche 1 bis 12 ausführen lässt.

15. Computerprogramm-Produkt mit dem Computer-lesbaren Medium nach Anspruch 14.

16. Steuereinrichtung für ein Handover einer Kommunikationsverbindung (160) zwischen einer Mobilvorrichtung (120) und einem gegenwärtigen Netz (110) zu einem neuen Netz (130), wobei die Kommunikationsverbindung (160) einen Kommunikationsservice zu der Mobilvorrichtung überträgt, umfassend:
eine Kontext-Handhabungsvorrichtung (101) zum Sammeln von Kontextparametern in dem gegenwärtigen Netz, wobei die Kontextparameter die Kommunikationsverbindung (160) und den Kommunikationsservice kennzeichnen, zum Zuweisen von Prioritäten für die Kontextparameter oder Kontextparametersätze, zum Bestimmen einer verfügbaren Zeit zwischen der Handover-Entscheidung und der tatsächlichen Handover-Ausführung, zum Bestimmen eines zu transferierenden Anteils der Kontextparameter auf Grundlage der verfügbaren Zeit und auf Grundlage der zugewiesenen Prioritäten, und zum Übertragen des Anteils der Kontextparameter von dem gegenwärtigen Netz (110) zu dem neuen Netz (130); und
eine Handover-Handhabungsvorrichtung (102) zum Durchführen des Handovers von der den Kommunikationsservice übertragenden Kommunikationsverbindung (160) an das neue Netz (130).

17. Steuereinrichtung nach Anspruch 16, wobei die Kontext-Handhabungsvorrichtung (101) ausgelegt ist zum Entscheiden, ob ein Kontextparameter ein unabhängiger Kontextparameter ist, wobei ein unabhängiger Kontextparameter ein Kontextparameter ist, der nach dem Handover auf zumindest einen von der Kommunikationsverbindung (160) und Kommunikationsservice anwendbar ist.

18. Steuereinrichtung nach einem der Ansprüche 16 und 17, wobei die Kontext-Handhabungsvorrichtung ausgelegt ist zum Entscheiden, ob ein Kontextparameter ein abhängiger Kontextparameter ist, wobei ein abhängiger Kontextparameter ein Kontextparameter ist, der nach dem Handover nicht auf die Kommunikationsverbindung (160) und Kommunikationsservice anwendbar ist.

19. Steuervorrichtung nach Anspruch 16, wobei die Kontext-Handhabungsvorrichtung (101) ausgelegt ist zum Übertragen von nur den unabhängigen Kontextparametern an das neue Netz (130).

20. Steuervorrichtung nach einem der Ansprüche 16 - 19, wobei die Kontext-Handhabungsvorrichtung (101) ausgelegt ist zum Durchführen des Entscheidungsprozesses auf Grundlage von zumindest einem von:
- einer Zugangstechnologie in dem gegenwärtigen Netz (110) und dem neuen Netz (130);
- einem Interessenvertreter des gegenwärtigen Netz;
- einem Interessenvertreter des neuen Netzes; und
- einer Vertrauensbeziehung zwischen dem gegenwärtigen Netz (110) und dem neuen Netz (130).

21. Steuervorrichtung nach einem der Ansprüche 16 - 20, wobei die Prioritäten auf Grundlage einer Richtlinie zugewiesen werden.

22. Steuervorrichtung nach einem der Ansprüche 16 - 21, wobei die Kontext-Handhabungsvorrichtung (101) ausgelegt ist zum Zuweisen einer höchsten Priorität zu den Kontextparametern, die zum Einrichten der Kommunikationsverbindung (160) zwischen der Mobilvorrichtung (120) und dem neuen Netz (130) erforderlich sind.

23. Steuervorrichtung nach einem der Ansprüche 16 - 22, wobei die Kontext-Handhabungsvorrichtung (101) ausgelegt ist zum Zuweisen einer zweithöchsten Priorität zu den Kontextparametern, die zum Aufrechterhalten des Kommunikationsservice nach dem Handover erforderlich sind.

24. Steuervorrichtung nach einem der Ansprüche 16 - 23, wobei die Kontext-Handhabungsvorrichtung (101) ausgelegt ist zum Zuweisen der Priorität in Anhängigkeit von zumindest einem von:
- einem Servicetyp;
- einer Servicelevelvereinbarung;
- dem neuen Netz (130);
- einer Zugangstechnologie; und
- einem Interessenvertreter des neuen Netzes (130).

25. Steuervorrichtung nach einem der Ansprüche 16 - 24, wobei ein erster Interessenvertreter das gegenwärtige Netz (110) betreibt und ein zweiter Interessenvertreter das neue Netz (130) betreibt.

## Revendications

1. Procédé de transfert intercellulaire d'une liaison de communication (160) entre un dispositif mobile (120) et un réseau courant (110) vers un nouveau réseau (130), la liaison de communication (160) fournissant un service de communication au dispositif mobile, comprenant :
la collecte de paramètres de contexte au niveau du réseau courant (110), les paramètres de contexte caractérisant la liaison de communication (160) et le service de communication ;
l'attribution de priorités aux paramètres de contexte ou à des ensembles de paramètres de contexte ;
la détermination du temps disponible entre une décision de transfert intercellulaire et une exécution réelle de transfert intercellulaire ;
la détermination d'une partie des paramètres de contexte à transférer en se basant sur le temps disponible et en se basant sur les priorités attribuées ;
la transmission de la partie des paramètres de contexte depuis le réseau courant (110) vers le nouveau réseau (130) ; et
l'exécution du transfert intercellulaire de la liaison de communication (160) et du service de communication vers le nouveau réseau (130) en se basant sur les paramètres de contexte.

2. Procédé selon la revendication 1, comprenant la décision de savoir si un paramètre de contexte est un paramètre de contexte indépendant, dans lequel un paramètre de contexte indépendant est un paramètre de contexte applicable à l'un au moins de la liaison de communication (160) et du service de communication après le transfert intercellulaire.

3. Procédé selon l'une des revendications précédentes, comprenant la décision de savoir si un paramètre de contexte est un paramètre de contexte dépendant, dans lequel un paramètre de contexte dépendant est un paramètre de contexte qui n'est pas applicable à la liaison de communication (160) et au service de communication après le transfert intercellulaire.

4. Procédé selon la revendication 2, comprenant la transmission seulement des paramètres de contexte indépendants vers le nouveau réseau (130).

5. Procédé selon l'une des revendications 2 à 4, dans lequel le processus de décision est basé sur l'un au moins :
- d'une technologie d'accès au niveau du réseau courant (110) et du nouveau réseau (130) ;
- d'un partenaire du réseau courant ;
- d'un partenaire du nouveau réseau (130) ; et
- d'une relation de confiance entre le réseau courant (110) et le nouveau réseau (130).

6. Procédé selon l'une des revendications précédentes, dans lequel les priorités sont attribuées en se basant sur une politique.

7. Procédé selon l'une des revendications précédentes, dans lequel les paramètres de contexte nécessaires pour établir la liaison de communication (160) entre le dispositif mobile (120) et le nouveau réseau (130) se voient attribuer une priorité la plus élevée.

8. Procédé selon l'une des revendications précédentes, dans lequel les paramètres de contexte nécessaires pour maintenir le service de communication après le transfert intercellulaire se voient attribuer une seconde priorité la plus élevée.

9. Procédé selon l'une des revendications précédentes, dans lequel la priorité dépend de l'un au moins :
- d'un type de service ;
- d'un accord de niveau de service ;
- du nouveau réseau (130) ;
- d'une technologie d'accès ; et
- d'un partenaire du nouveau réseau (130).

10. Procédé selon l'une des revendications précédentes, dans lequel un paramètre de contexte peut être constitué par l'un au moins du groupe constitué par :
- une caractéristique du dispositif mobile ;
- une caractéristique de la liaison de communication (160) ;
- une caractéristique du service de communication ;
- une caractéristique du réseau courant (110) et/ou du nouveau réseau (130).

11. Procédé selon l'une des revendications précédentes, dans lequel le nouveau réseau (130) prépare le paramétrage de la liaison de communication (160) et du service de communication en se basant sur les paramètres de contexte.

12. Procédé selon l'une des revendications précédentes, dans lequel un premier partenaire met en oeuvre le réseau courant (110) et un second partenaire met en oeuvre le nouveau réseau (130).

13. Programme comportant des instructions conçues pour exécuter le procédé selon l'une quelconque des revendications 1 à 12.

14. Support lisible par ordinateur, dans lequel un programme est incorporé, dans lequel le programme doit faire en sorte qu'un dispositif de traitement de données exécute le procédé selon l'une quelconque des revendications 1 à 12.

15. Produit formant programme informatique comprenant le support lisible par ordinateur selon la revendication 14.

16. Moyen de commande pour le transfert intercellulaire d'une liaison de communication (160) entre un dispositif mobile (120) et un réseau courant (110) vers un nouveau réseau (130), la liaison de communication (160) transportant un service de communication vers le dispositif mobile, comprenant :
un gestionnaire de contexte (101) pour collecter des paramètres de contexte au niveau du réseau courant, les paramètres de contexte caractérisant la liaison de communication (160) et le service de communication, pour attribuer des priorités aux paramètres de contexte ou à des ensembles de paramètres de contexte, pour déterminer un temps disponible entre la décision de transfert intercellulaire et l'exécution réelle de transfert intercellulaire, pour déterminer une partie des paramètres de contexte à transférer en se basant sur le temps disponible et en se basant sur les priorités attribuées, et pour transmettre la partie des paramètres de contexte depuis le réseau courant (110) vers le nouveau réseau (130) ; et
un gestionnaire de transfert intercellulaire (102) pour effectuer le transfert intercellulaire de la liaison de communication (160) transportant le service de communication vers le nouveau réseau (130).

17. Moyen de commande selon la revendication 16, dans lequel le gestionnaire de contexte (101) est conçu pour décider si un paramètre de contexte est un paramètre de contexte indépendant, dans lequel un paramètre de contexte indépendant est un paramètre de contexte applicable à l'un au moins de la liaison de communication (160) et du service de communication après le transfert intercellulaire.

18. Moyen de commande selon l'une des revendications 16 et 17, dans lequel le gestionnaire de contexte (101) est conçu pour décider si un paramètre de contexte est un paramètre de contexte dépendant, dans lequel un paramètre de contexte dépendant est un paramètre de contexte qui n'est pas applicable à la liaison de communication (160) et au service de communication après le transfert intercellulaire.

19. Moyen de commande selon la revendication 16, dans lequel le gestionnaire de contexte (101) est conçu pour transmettre seulement les paramètres de contexte indépendants vers le nouveau réseau (130).

20. Moyen de commande selon l'une des revendications 16 à 19, dans lequel le gestionnaire de contexte (101) est conçu pour effectuer le processus de décision en se basant sur l'un au moins :
- d'une technologie d'accès au réseau courant (110) et au nouveau réseau (130) ;
- d'un partenaire du réseau courant ;
- d'un partenaire du nouveau réseau (130) ; et
- d'une relation de confiance entre le réseau courant (110) et le nouveau réseau (130).

21. Moyen de commande selon l'une des revendications 16 à 20, dans lequel les priorités sont attribuées en se basant sur une politique.

22. Moyen de commande selon l'une des revendications 16 à 21, dans lequel le gestionnaire de contexte (101) est conçu pour attribuer aux paramètres de contexte nécessaires pour établir la liaison de communication (160) entre le dispositif mobile (120) et le nouveau réseau (130) une priorité la plus élevée.

23. Moyen de commande selon l'une des revendications 16 à 22, dans lequel le gestionnaire de contexte (101) est conçu pour attribuer aux paramètres de contexte nécessaires pour maintenir le service de communication après le transfert intercellulaire une seconde priorité la plus élevée.

24. Moyen de commande selon l'une des revendications 16 à 23, dans lequel le gestionnaire de contexte (101) est conçu pour attribuer la priorité selon l'un au moins :
- d'un type de service ;
- d'un accord de niveau de service ;
- du nouveau réseau (130) ;
- d'une technologie d'accès ; et
- d'un partenaire du nouveau réseau (130).

25. Moyen de commande selon l'une des revendications 16 à 24, dans lequel un premier partenaire met en oeuvre le réseau courant (110) et un second partenaire met en oeuvre le nouveau réseau (130).
